# EUROPEAN PATENT SPECIFICATION

(11) **EP 4 201 024 B1**
(45) Date of publication and mention of the grant of the patent: **12.06.2024**
(21) Application number: 21702613.7
(22) Date of filing: 27.01.2021
(51) Int. Cl.: G06F 21/57, G06F 21/55, H04L 9/40

(54) **TECHNIQUE FOR DETERMINING A SAFETY-CRITICAL STATE**
VERFAHREN ZUR BESTIMMUNG EINES SICHERHEITSKRITISCHEN ZUSTANDS
TECHNIQUE DE DÉTERMINATION D'UN ÉTAT CRITIQUE DE SÉCURITÉ

(30) Priority: 24.08.2020 TR 202013348
(43) Date of publication of application: 28.06.2023
(73) Proprietor: Telefonaktiebolaget LM Ericsson (publ), 164 83 Stockholm (SE)
(72) Inventor: TOMUR, Emrah, 35140 Izmir (TR); BILGIN, Zeki, 34912 Istanbul (TK); ERSOY, Mehmet Akif, 34876 Istanbul (TR); USTUNDAG SOYKAN, Elif, 34660 Istanbul (TR); KARAÇAY, Leyli, 34776 Istanbul (TR); KARAKOC, Ferhat, 34912 Istanbul (TR)
(74) Representative: Ericsson
(86) International application number: PCT/EP2021/051861
(87) International publication number: WO 2022/042889

(56) References cited:
- EP-A1- 3 206 368
- WO-A1-2014/130015
- WO-A1-2019/036365

## Description

### Technical Field

The present disclosure generally relates to cyber-physical systems. In particular, a technique for determining a safety-critical state in a cyber-physical system (CPS) is presented. The technique may be embodied in methods, computer programs, apparatuses and systems.

### Background

In various industrial applications, cyber and physical components coexist in so called cyber-physical systems (CPSs). A CPS is a system in which at least one physical component is controlled by computer software, wherein the physical and software components are deeply intertwined and interact with each other to operate the system. Examples of CPSs include smart grids, autonomous automobile systems, industrial automation systems, robotic systems, medical monitoring systems, automatic pilot avionics, or the like.

A major difference related to the security of a CPS as compared to conventional IT security is the priority change to preventing unwanted consequences from cyber assets to physical assets. While, in the conventional IT domain, security is concerned with the protection of information and the software of the related computing systems themselves (cyber assets), the most important requirement in a CPS is protecting the well-being of a person, equipment and the environment (physical assets) from any potentially harmful situation or damage. In other words, safety is concerned with reducing the risk of danger to people and machinery caused by accidents or errors.

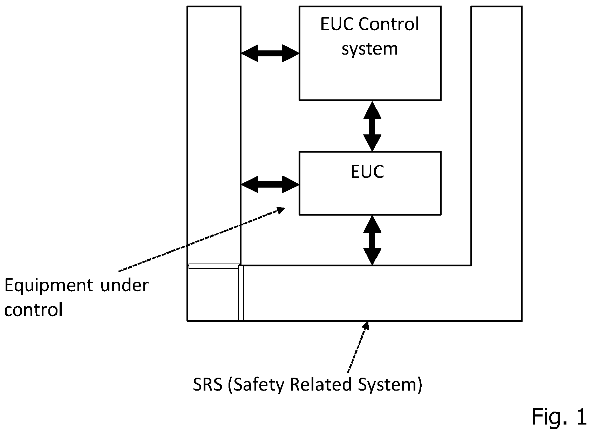

Functional safety is part of the overall system safety and generally depends on equipment operating correctly in response to its inputs. A system which carries out safety functions is generally called a safety-related system (SRS). As shown in Figure 1, an SRS may (but does not necessarily have to) be separate from the control system of the CPS and is intended to detect potentially hazardous operational states and place the system into a "safe state" before a hazardous state occurs. An SRS may comprise a dedicated controller, such as a safety programmable logic controller (PLC) or a safety central processing unit (CPU), and, using simple logic operations with inputs received from safety sensors, an SRS may implement a safety function to protect against the harm that can be caused by an equipment under control (EUC), such as a robot, machine, automated guided vehicle (AGV), or the like. An SRS may thus comprise dedicated safety sensors, a safety application/program and safety actuators which may be controlled in dependence on the measurements performed by the safety sensors in order to prevent potential hazardous states. Example safety functions triggered by safety actuators may include performing emergency stops (e.g., forcing an automation system into a fail-safe mode), slowing down system operation, actuating fire extinguishers, automatic braking in autonomous vehicles, and so on.

SRSs may employ dedicated safety protocols to transmit safety data over the underlying wired or wireless communication channels. An exemplary protocol is PROFIsafe, which is an application layer protocol that can be used to detect systematic and stochastic failures resulting from nodes and network faults leading to potential hazards. PROFIsafe uses information like cyclic redundancy check (CRC), timestamp, sequence number, sender/receiver name, etc. to deterministically discover possible faults and hazards and to thereby keep error probability under a certain limit.

Integrity protection in the context of most safety function protocols, including PROFIsafe, only deals with bit errors caused by the communication channel itself (e.g., integrity in PROFIsafe only relies on CRC), but does not provide any integrity check mechanism covering malicious intervening of safety packets. Security violations originating from malicious acts may affect the safety of a system by fooling the system into thinking that there is no emergency and that safety functions do not need to be triggered, for example. In addition, such attacks may deteriorate availability, i.e., by frequent and/or steady interruption of system operation, such as due to intentional falsification of the safety function which causes the system to switch to fail-safe operation when there is no true emergency or danger. PROFIsafe does not provide any inherent protection against such intentional attacks.

Attackers modifying packets sent by safety sensors to fool a safety controller into assessing the safety situation in a false way may generally include the following scenarios. (1) If there is a true emergency (e.g., emergency button being pressed, or sensor measurements indicating a hazardous situation), a PROFIsafe message sent by a safety sensor may be modified maliciously to indicate that there is no emergency, which may put harm to the worker, machinery and/or environment. (2)

If there is no true emergency, a PROFIsafe message of a safety sensor may maliciously be modified to flag the message as if there was an emergency, which may cause the safety controller to force the system into an emergency shut-down or slowing-down, for example, thereby decreasing availability in a normal (non-emergency) situation. (3) While, in cases (1) and (2), malicious parties need to recalculate a matching CRC with the packet they modified to make the attack go undetected (again, integrity in PROFIsafe relies on CRC), an attacker may also insert unauthorized safety packets in the network without any concern to match a CRC.

To address these issues, the employment of embedded cryptographic security measures may generally be considered (e.g., as an additional security layer between the communication layer and the safety layer at which PROFIsafe operates). However, the application of cryptographic measures suffers from several drawbacks, including the burden of extra computations and overhead bytes for security creating negative effects on timing/latency performance, or challenging cryptographic key management with lots of non-IT devices, for example, which may make the solution inexpedient for various cases.

Cryptographic countermeasures may also be insufficient to prevent situations in which malicious parties fool the safety controller through spoofing of the current situation measured by the sensor devices. For example, a known car manufacturer has designed a safety feature by which the doors of a car unlock if the car is involved in an accident and rolls over. To check for roll-over situations, it was only verified whether enough pressure/weight was applied on the roof of the car via a dedicated pressure sensor. The safety feature could easily be exploited by thieves, however, namely by jumping on the roof of the car to automatically unlock the doors, which was the reason why this car model was frequently a target for theft.

Attacks without modification of safety messages but involving the fooling of the safety assessment system may generally include the following scenarios. (1) If there is no true emergency or safety issue, the safety function is activated by maliciously falsified sensor data by spoofing it in such a way that it negatively affects security (e.g., door opening, robots/machines stopping in normal situations). (2) If there is a true emergency or safety issue, the safety function is not activated by fooling safety sensors into thinking that there is no emergency, thereby potentially causing damage to people, equipment and/or the environment.

These examples show that safety solutions not only need to prevent cyber-attacks aiming at malicious modification of safety messages, but also remote or on-site spoofing of the involved sensing systems, for example.

Document WO2019/036365 A1 refers to a modelling of cyber-physical attack paths in IoT for determining a weakness or risk for devices of an IoT network including monitoring the physical environment and actual interactions between the devices to generate a network model.

### Summary

Accordingly, there is a need for a technique that enables reliably determining a safety-critical state in a CPS which avoids one or more of the problems discussed above, or other problems.

The invention is defined by the appended claims. Further embodiments are described by the dependent claims.

According to a first aspect, a method for determining a safety-critical state in a CPS is provided. The method is performed by a safety component of the CPS and comprises obtaining combined sensor data from a plurality of sensors available in the CPS, the combined sensor data being indicative of a current state of the CPS, obtaining at least one intent-based safety policy, wherein an intent-based safety policy corresponds to a safety policy indicative of a predefined safety-related intent concerning an operational state of the CPS, and checking the combined sensor data against the at least one intent-based safety policy to determine whether or not the CPS is in a safety-critical state and wherein checking the combined sensor data against the at least one intent-based safety policy is triggered by a new sensor measurement of a sensor (410, 424) of the plurality of sensors.

The plurality of sensors may comprise at least one sensor that is not a dedicated safety sensor of the CPS. The method may further comprise taking a safety decision based on a result of checking the combined sensor data against the at least one intent-based safety policy, and causing a safety actuator of the CPS to perform a safety operation based on the safety decision. Checking the combined sensor data against the at least one intent-based safety policy may be triggered by a new sensor measurement of a sensor of the plurality of sensors. The combined sensor data may be obtained from a context server configured to combine currently measured sensor data from the plurality of sensors to thereby generate the combined sensor data. The plurality of sensors may include sensors of a same or different type. In the combined sensor data, sensor data of at least two different sensors of the plurality of sensors may be weighted differently.

The at least one intent-based safety policy may be obtained from an intent server configured to store intent-based safety policies, wherein the intent-based safety policies correspond to safety policies indicative of predefined safety-related intents concerning operational states of the CPS. Each of the at least one intent-based safety policy may be translated from a natural language intent statement. Each of the at least one intent-based safety policy may be represented by one or more rules, in particular by one or more logical expressions, wherein checking the combined sensor data against the at least one intent-based safety policy to determine whether or not the CPS is in a safety-critical state may include performing rule-based reasoning based on the one or more rules of each of the at least one intent-based safety policy. Each of the at least one intent-based safety policy may define one or more conditions to be satisfied by at least a subset of the combined sensor data, wherein checking the combined sensor data against the at least one intent-based safety policy to determine whether or not the CPS is in a safety-critical state may include checking the combined sensor data against the one or more conditions of each of the at least one intent-based safety policy.

Checking the combined sensor data against the at least one intent-based safety policy to determine whether or not the CPS is in a safety-critical state may also be performed using a machine learning model trained to determine, from combined sensor data from the plurality of sensors and intent-based safety policies which correspond to security policies indicative of predefined safety-related intents concerning operational states of the CPS, whether or not the CPS is in a safety-critical state. The machine learning model may be trained using training data comprising historical combined sensor data measured by the plurality of sensors in the CPS and intent-based safety policies which correspond to security policies indicative of predefined safety-related intents concerning operational states of the CPS as input data, and corresponding results on whether or not the CPS is in a safety-critical state as output data.

The method may further comprise determining predicted combined sensor data from the plurality of sensors using a machine learning model trained to map time series of historical combined sensor data from the plurality of sensors to predicted combined sensor data from the plurality of sensors. The method may further comprise checking the predicted combined sensor data against the at least one intent-based safety policy to predict whether or not the CPS will be in a safety-critical state. The combined sensor data and the predicted combined sensor data may align temporally, wherein the method may further comprise comparing the combined sensor data with the predicted combined sensor data, and determining malicious behavior regarding the plurality of sensors when a difference between the combined sensor data and the predicted combined sensor data exceeds a threshold value. Causing a safety actuator of the CPS to perform a safety operation may be prevented when malicious behavior regarding the plurality of sensors is determined. The CPS may comprise at least one of an industrial Internet of Things, IoT, system, a smart manufacturing system, a smart grid, a smart home, and a connected or autonomous car.

A method for supporting determination of a safety-critical state in a CPS is described. The method is performed by a context server and comprises combining sensor data measured from a plurality of sensors available in the CPS to generate combined sensor data indicative of a current state of the CPS, and providing the combined sensor data to a safety component of the CPS, enabling the safety component to check the combined sensor data against at least one intent-based safety policy to determine whether or not the CPS is in a safety-critical state, wherein an intent-based safety policy corresponds to a safety policy indicative of a predefined safety-related intent concerning an operational state of the CPS.

The method described in the paragraph before defines a method from the perspective of a context server which may be complementary to the method performed by the safety component according to the first aspect. The safety component and the context server of the second aspect may correspond to the safety component and the context server described above in relation to the first aspect.

A method for supporting determination of a safety-critical state in a CPS is described. The method is performed by an intent server and comprises storing intent-based safety policies, wherein the intent-based safety policies correspond to security policies indicative of predefined safety-related intents concerning operational states of the CPS, and providing at least one intent-based safety policy of the intent-based safety policies to a safety component of the CPS, enabling the safety component to check combined sensor data from a plurality of sensors available in the CPS against the at least one intent-based safety policy to determine whether or not the CPS is in a safety-critical state, wherein the combined sensor data is indicative of a current state of the CPS.

The method described in the paragraph before defines a method from the perspective of an intent server which may be complementary to the method performed by the safety component according to the first aspect. The safety component and the intent server of the third aspect may correspond to the safety component and the intent server described above in relation to the first aspect.

According to a second aspect, a computer program product is provided. The computer program product comprises program code portions for performing the method of at least one of the first, the second and the third aspect when the computer program product is executed on one or more computing devices (e.g., a processor or a distributed set of processors). The computer program product may be stored on a computer readable recording medium, such as a semiconductor memory, DVD, CD-ROM, and so on.

According to a third aspect, a computing unit configured to execute a safety component of a CPS for determining a safety-critical state in the CPS is provided. The computing unit comprises at least one processor and at least one memory, wherein the at least one memory contains instructions executable by the at least one processor such that the safety component is operable to perform any of the method steps presented herein with respect to the first aspect.

A computing unit configured to execute a context server of a CPS for supporting determination of a safety-critical state in the CPS is described. The computing unit comprises at least one processor and at least one memory, wherein the at least one memory contains instructions executable by the at least one processor such that the context server is operable to perform any of the method steps presented herein as far as related to the context server.

A computing unit configured to execute an intent server of a CPS for supporting determination of a safety-critical state in the CPS is described. The computing unit comprises at least one processor and at least one memory, wherein the at least one memory contains instructions executable by the at least one processor such that the intent server is operable to perform any of the method steps presented herein as far as related to the intent server.

A system comprising a computing unit according to the third aspect, optionally, a computing unit according to the context server and, further optionally, a computing unit according to the intent server.

### Brief Description of the Drawings

Implementations of the technique presented herein are described herein below with reference to the accompanying drawings, in which:
- Fig. 1: schematically illustrates an SRS carrying out safety functions for an EUC;
- Figs. 2a to 2c: illustrate exemplary compositions of a computing unit configured to execute a safety component, a computing unit configured to execute a context server, and a computing unit configured to execute an intent server according to the present disclosure;
- Fig. 3: illustrates a method which may be performed by the safety component according to the present disclosure;
- Fig. 4: illustrates an exemplary system including a CPS which is safety protected using a safety decision program carrying out the functionality of the safety component according to the present disclosure;
- Fig. 5: illustrates a sequence diagram of an exemplary message flow between the components of Figure 4;
- Fig. 6: illustrates a schematic overview of how a machine learning model may be employed in the decision process according to the present disclosure;
- Fig. 7: illustrates exemplary training data used to train a machine learning model according to the present disclosure;
- Fig. 8: illustrates an exemplary definition of intents as used in the training data of Figure 7;
- Fig. 9: illustrates a schematic overview of how machine learning may be employed for predicting safety-critical situations in a CPS;
- Fig. 10: illustrates a method which may be performed by the context server according to the present disclosure; and
- Fig. 11: illustrates a method which may be performed by the intent server according to the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

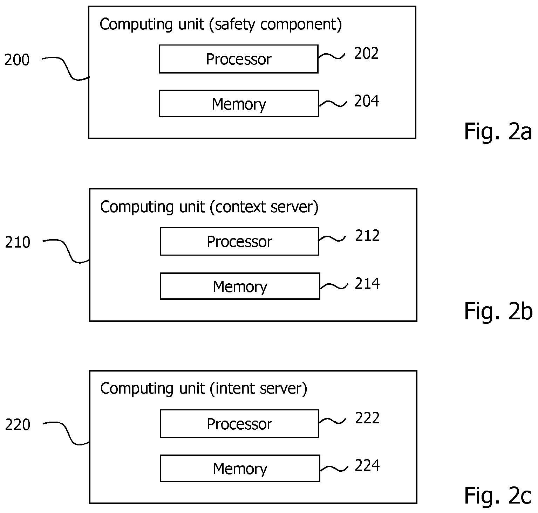

Figure 2a schematically illustrates an exemplary composition of a computing unit 200 configured to execute a safety component of a CPS for determining a safety-critical state in the CPS. The computing unit 200 comprises at least one processor 202 and at least one memory 204, wherein the at least one memory 204 contains instructions executable by the at least one processor 202 such that the safety component is operable to carry out the method steps described herein below with reference to the safety component.

Figure 2b schematically illustrates an exemplary composition of a computing unit 210 configured to execute a context server of a CPS for supporting determination of a safety-critical state in the CPS. The computing unit 210 comprises at least one processor 212 and at least one memory 214, wherein the at least one memory 214 contains instructions executable by the at least one processor 212 such that the context server is operable to carry out the method steps described herein below with reference to the context server.

Figure 2c schematically illustrates an exemplary composition of a computing unit 220 configured to execute an intent server of a CPS for supporting determination of a safety-critical state in the CPS. The computing unit 220 comprises at least one processor 222 and at least one memory 224, wherein the at least one memory 224 contains instructions executable by the at least one processor 222 such that the intent server is operable to carry out the method steps described herein below with reference to the intent server.

It will be understood that, as server execution environments, each of the computing unit 210 and the computing unit 220 may be implemented on physical computing units or virtualized computing units, such as a virtual machine, for example. It will further be appreciated that each of the computing unit 210 and the computing unit 220 may not necessarily be implemented on standalone computing units, but may be implemented as components - realized in software and/or hardware - residing on multiple distributed computing units as well, such as in a cloud computing environment, for example. The computing unit 200, on the other hand, as an execution environment for a safety component of the CPS, may correspond to an industrial computer including a safety PLC or safety CPU, for example. More detailed implementation options for the computing unit 200 will the described further below.

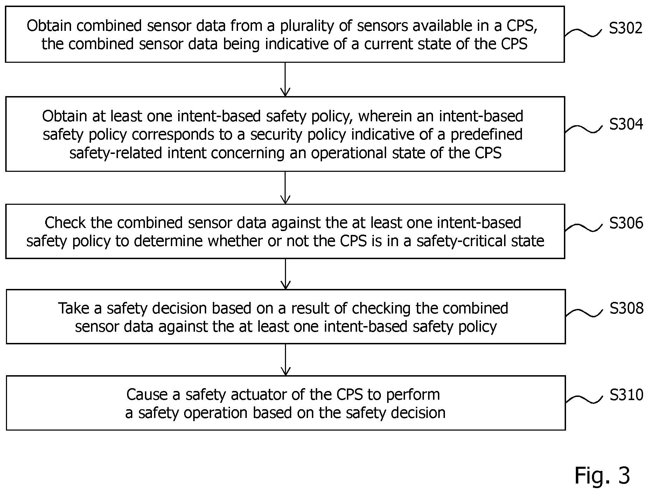

Figure 3 illustrates a method which may be performed by the safety component executed on the computing unit 200 according to the present disclosure. The method is dedicated to determining a safety-critical state in a CPS. In step S302, the safety component may obtain combined sensor data from a plurality of sensors available in the CPS, the combined sensor data being indicative of a current state of the CPS. In step S304, the safety component may obtain at least one intent-based safety policy, wherein an intent-based safety policy corresponds to a safety policy indicative of a predefined safety-related intent concerning an operational state of the CPS. In step S306, the safety component may check the combined sensor data against the at least one intent-based safety policy to determine whether or not the CPS is in a safety-critical state.

Thus, in order to determine a safety-critical state in a CPS, the method may jointly utilize context information obtained from a plurality of sensors as well as an operational intent as the main decision parameters in a safety decision program. By the joint use of context information and operational intents, drawbacks of conventional safety systems, which typically rely on simplistic decisions that can be fooled by malicious attackers, may be overcome. While, on the one hand, conventional systems usually operate as rule-based systems that rely on conditional statements regarding single-valued sensor data to trigger safety functions (e.g., if a temperature value is above a threshold, if communication is broken, etc.), the combined sensor data according to the technique presented herein may be collected from multiple sensors available in the CPS (i.e., not just a single sensor), resulting in a combination of measurements from multiple sensors (e.g., represented in the form of a vector) to provide a more detailed description of the current safety-related situation in the CPS. The combined sensor data gathered at a given time may thus represent a collection of different individual raw sensor measurements at that time, which together may represent a current safety-related state of the CPS. The resulting state may have a higher entropy than a state derived from single-valued data.

The collective sensor data may be gathered from all sensors relevant to determine a safety-critical state of the CPS, i.e., not only dedicated safety sensors, but also other sensors available in the CPS which are originally not dedicated to be used for safety purposes (such as ambient sensors, for example) in order to obtain a more representative view on the state of the system (and optionally its environment), to thereby be able to make a better decision on the safety situation and to check whether or not there is indeed an emergency situation. The plurality of sensors may thus comprise at least one sensor that is not a dedicated safety sensor of the CPS. A dedicated safety sensor may be a sensor which is specifically employed for safety monitoring purposes in the CPS (e.g., rotating speed of motors, device temperature, machinery power consumption, or the like).

As said, in addition to context information obtained from a plurality of sensors, the technique presented herein may further rely on at least one operational intent as one of the main decision parameters in the safety decision program. In other words, instead of blindly relying on raw sensor data and/or safety protocol status packets received from safety sensors (which, as discussed above, might be spoofed and/or modified), a decision on the current safety situation may be intelligently made by checking the combined sensor data against (or "on alignment with") previously configured operational intents describing a normal (or "safe") operation of the CPS. An operational intent may be formulated in the form of an intent-based safety policy which may be indicative of a predefined safety-related intent concerning an operational state of the CPS. An intent may be a (e.g., natural language) declaration of one or more operational goals or states that the system should meet. Using an intent, it may be possible to determine whether the system currently is in a safety-critical state, i.e., by checking whether the current situation represented by the combined sensor data falls within the goals or states defined by the intent. By using the combined sensor data together with the operational intents, it will be understood that a more founded and well-informed decision on the current safety state of the system may be made.

Once a decision on the current safety state of the CPS is made, the result of the decision may be used to take action accordingly, e.g., to perform a safety operation that prevents a hazardous state of the system to occur. In step S308 of the method, the safety component may thus take a safety decision based on a result of checking the combined sensor data against the at least one intent-based safety policy and, in step S310, the safety component may cause a safety actuator of the CPS to perform a safety operation based on the safety decision. In particular, a safety operation may be performed if checking the combined sensor data against the at least one intent-based safety policy reveals that the combined sensor data is not in alignment with (or "does not meet the requirements set by") the at least one intent-based safety policy, i.e., in other words, if the operational intent is not met. The safety operation being performed may depend on the particular use case and, as described above, may include operations like carrying out emergency stops (e.g., forcing an automation system into a fail-safe mode), slowing down system operation, actuating fire extinguishers, automatic braking in autonomous vehicles, for example. In certain variants, it may be conceivable that the safety operation may be selected from multiple (non-binary) actuation options, e.g., depending on the combined sensor data and/or the at least one intent-based safety policy, as will be exemplified further below.

Checking the combined sensor data against the at least one intent-based safety policy may be performed in a manner to ensure timeliness with respect to the current operational state of the CPS. For example, the check may be performed each time a new sensor measurement is received from a sensor of the plurality of sensors, which potentially represents a change in the operational state of the CPS. In one variant, checking the combined sensor data against the at least one intent-based safety policy may thus be triggered by new sensor measurement of a sensor of the plurality of sensors.

While the combined sensor data may be computed by the safety component itself, i.e., involving the receipt of individual sensor data from the plurality of sensors and combining it accordingly, it will be understood that, according to variants which relieve the safety component from performing these computations, the combined sensor data may be obtained from a dedicated server responsible for sensor data combination. The combined sensor data may thus be obtained (or "received") from a context server configured to combine (or "aggregate") currently measured sensor data from the plurality of sensors to thereby generate the combined sensor data. The context server may provide the resulting combined sensor data to the safety component in a request/response scheme, for example. Combination (or "aggregation") may here mean a simple combination of measurements from multiple sensors into a vector representing a more thorough description of the current safety-related situation of the CPS. The combined sensor data may sometimes also be denoted as "context information" or "combined context information" herein.

The plurality of sensors from which the combined sensor data is generated may include sensors of the same or different type and, in order to better reflect the current safety-related situation, different sensors (or different types of sensors) may have different weights in the safety analysis calculations. In the combined sensor data, individual sensor data of at least two different sensors of the plurality of sensors may thus be weighted differently. For example, if the different sensors are of the same type, a sensor in a more critical area of the CPS may be weighted higher compared to a sensor in a less critical area of the CPS. If the different sensors are of different types, on the other hand, a sensor having more safety relevance may be weighted higher compared to a sensor having less safety relevance, for example.

Similar to the provision of a context server providing combined sensor data to the safety component, it will be understood that, in some variants, the at least one intent-based safety policy may be obtained from a dedicated server responsible for the provision of intent-based safety policies as well (e.g., in a request response scheme). The at least one intent-based safety policy may thus be obtained (or "received") from an intent server configured to store intent-based safety policies, wherein the intent-based safety policies may correspond to safety policies indicative of predefined safety-related intents concerning operational states of the CPS.

As said, an intent may be a natural language declaration of one or more operational goals or states that the CPS should meet. As in other intent-based technologies, such as intent-based networking (IBN), where intents are employed to allow users to express what is required from a network and where the network automatically resolves the detailed steps necessary to achieve the desired goals or states, an intent as used herein may likewise be defined as a requirement stating at high level "what to achieve". Intents may be formulated by a user, like a person in charge of the CPS, such as a factory manager in a manufacturing use case, for example. In some cases, intents may also be formulated by a machine learning agent, but may need to be approved by a user (human-in-the-loop). In order to make the natural language declaration processable by computing systems, such as the presently described safety component, the declaration may be translated into a machine-processable format, as will be exemplified further below. Each of the at least one intent-based safety policy may thus be translated (or "derived") from a natural language intent statement, e.g., prescribed by a user.

In one implementation, the intent-based safety policies may be represented by (or "be translated into") rules capable of being processed by a rule-based reasoning system. As a mere example, the intent-based safety policies may be represented by mathematical or logical expressions (e.g., second-order logic expressions) that can be processed by conventional reasoning systems using logic programming languages. It will be understood, however, that other rule-based implementations using other representations for safety policies suitable for processing in high level computer applications may be conceivable. Each of the at least one intent-based safety policy may thus be represented by one or more rules, in particular by one or more logical expressions, wherein checking the combined sensor data against the at least one intent-based safety policy to determine whether or not the CPS is in a safety-critical state may include performing rule-based reasoning based on the one or more rules of each of the at least one intent-based safety policy. Since a rule may define one or more conditions, each of the at least one intent-based safety policy may also define one or more conditions to be satisfied by the combined sensor data. As such, each of the at least one intent-based safety policy may also be said to define one or more conditions to be satisfied by at least a subset of the combined sensor data, wherein checking the combined sensor data against the at least one intent-based safety policy to determine whether or not the CPS is in a safety-critical state may include checking the combined sensor data against the one or more conditions of each of the at least one intent-based safety policy.

In another implementation, the intent-based safety policies may be represented using (or "be translated into") machine learning based models. More specifically, the checking of the combined sensor data against the at least one intent-based safety policy to determine whether or not the CPS is in a safety-critical state may be implemented using a machine learning model that maps combinations of combined sensor data with intent-based safety policies to statements regarding whether or not the CPS is in a safety-critical state. Checking the combined sensor data against the at least one intent-based safety policy to determine whether or not the CPS is in a safety-critical state may thus be performed using a machine learning model trained to determine, from combined sensor data from the plurality of sensors and intent-based safety policies which correspond to safety policies indicative of predefined safety-related intents concerning operational states of the CPS, whether or not the CPS is in a safety-critical state. The machine learning model may be a neural network, for example, but it will be understood that other machine learning models may generally be employed.

The training data used for training the machine learning model may comprise historical combined sensor data measured by the plurality of sensors in the CPS, which may be collected by the context server in a dedicated database, for example. This data may be combined with the intent-based safety policies stored by the intent server and then be used as input for the training of the machine learning model, whereas the output for the training of the machine learning model may be given by statements on whether or not the CPS is in a safety-critical state. The machine learning model may thus be trained using training data comprising historical combined sensor data measured by the plurality of sensors in the CPS and intent-based safety policies which correspond to safety policies indicative of predefined safety-related intents concerning operational states of the CPS as input data, and corresponding results on whether or not the CPS is in a safety-critical state as output data.

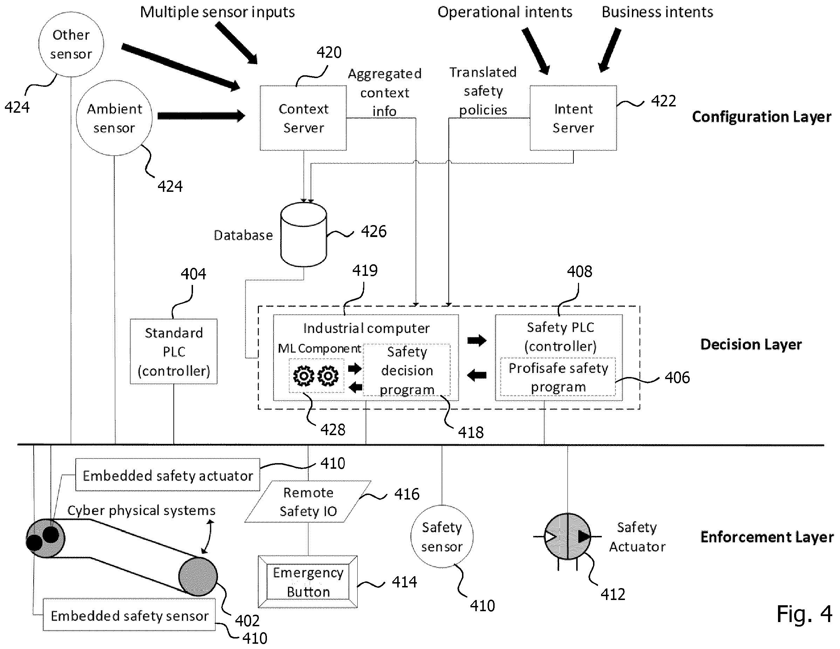

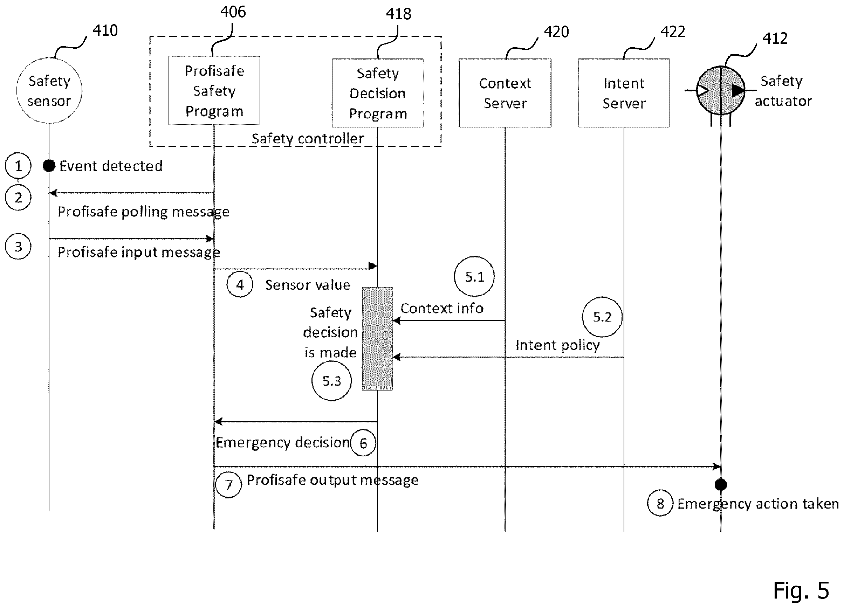

In the following, an exemplary implementation of the technique presented herein is described with reference to Figures 4 and 5 in order to better elucidate the above more general description of the technique. Figure 4 illustrates an exemplary system in which a CPS 402, such as a robot arm, is controlled using a standard PLC 404 and is safety protected using a (e.g., PROFIsafe) safety program 406 running on a safety PLC 408. As in any automation deployment with safety function, there are safety sensors 410, which may be embedded on the CPS 402 or installed separately, as well as safety actuators 412. An emergency button 414 may be connected to the safety PLC 408 via a remote safety I/O device 416.

Besides these components, which may exist in conventional systems, additional components are employed according to the presented technique to enable making more intelligent safety decisions based on extended context and intent, as described above. A safety decision program 418, which may be a computer program working in coordination with the safety program 406, and which may carry out the functionality of the safety component described above, may be employed (e.g., executed on an industrial computer 419) to decide on whether or not an emergency or safety-critical state currently is present. Such decision is made based on two main parameters, namely the combined sensor data ("context information") provided as input from a context server 420 and the intent-based safety policies provided as input from an intent server 422. The context server 420 is the main data collection and aggregation point for all sensor data relevant for the determination of the current state of the CPS (e.g., including not only data from the dedicated safety sensors 410, but also from other sensors 424, such as ambient sensors in order to obtain a more representative view on the state of the CPS 402, as described above) and produces the combined context information by aggregating all relevant incoming raw sensor data into a vector representing the combined sensor data, for example. The intent-based policy statements provided by the intent server 422 as input to the safety decision program 418 may be translated from natural language intents regarding the CPS defined by users in charge, as described above. Additionally, there is also a database 426 which provides historical storage of the combined sensor data generated by the context server 420 (optionally, including the corresponding collected individual sensor measurements), intent statements from the intent server 422, and corresponding decisions made by the safety decision program 418 on whether or not the respective combined sensor data and intent statements result in a safety-critical state or not. The historical storage may serve as training data for an optional machine learning component 428, which may be employed additionally or alternatively to the rule-based decision-making by the safety decision program 418.

Figure 5 is a sequence diagram illustrating an exemplary message flow between the components illustrated in Figure 4 when a new event is detected by a safety sensor 410. While the message flow is exemplified by messages of the PROFIsafe protocol, it will be understood that the same principles may apply to any other safety protocols as well. In step 1, the value measured by the safety sensor 410 is updated by a new measurement. In step 2, the safety program 406 sends a message to poll the sensor input, wherein polling may be performed periodically according to predefined polling intervals, for example. In step 3, the safety sensor 410 replies with a message to send the new measurement to the safety program 406. However, instead of directly making a decision based on the raw sensor measurement, as it is done in conventional techniques, the safety program 406 shares this measurement with the new safety decision program 418. The safety decision program 418 then, triggered by the receipt of the new raw sensor measurement, fetches the most current value of the combined context information from the context server 420 in step 5.1. In step 5.2, the safety decision program 418 also fetches the relevant intent-based safety policies from the intent server 422 and, in step 5.3, the safety decision program 418 makes an intelligent decision on the current safety-related situation based on comparing the combined context information against the intent-based safety policies, either in a rule-based manner or using the machine learning component 428, as explained above. If, based on the comparison, a safety-critical or emergency situation is detected, the safety decision program 418 sends a notification to the safety program 406 in step 6 accordingly. If no such situation is detected, the notification may be omitted. If the safety program 406 receives such notification, it sends a message to the safety actuator 412 in step 7, indicating the programmed safety operation to be performed. In step 8, the safety actuator 412 performs the commanded operation accordingly.

While, in the above example, the CPS 402 is represented by a robot arm, it will be understood that the presented technique may be practiced with any type of CPS. For example, the CPS may comprise at least one of an IoT system, a smart manufacturing system, a smart grid, a smart home, and a connected or autonomous car. Also, it will be understood that the safety decision program 418 being deployed as part of an industrial computer 419 (representative of the computing unit 200) is only one deployment option and that other deployment options are generally conceivable. If the underlying safety protocol allows for addition of new application logic into a safety program for handling of intent-based safety decisions, for example, the safety decision program may be augmented as an additional function into the original safety program and may not require any additional hardware. When safety protocols allow only particular types of programming, such as Function Block Diagram (FBD) and Ladder Diagram (LAD) programming languages, and intent-based safety decision logic cannot be implemented within these languages, the safety decision program may run outside of an existing safety program, such as on a dedicated industrial computer (like industrial computer 419) connected to the industrial network, wherein the existing safety program and the safety decision program may communicate over this network, for example. If the safety program runs in an edge cloud as a virtual controller, for example, the safety decision program may run in the cloud as well. The same may also apply to the intent and context servers. It will be understood that various other deployment options for the safety decision program generally exist.

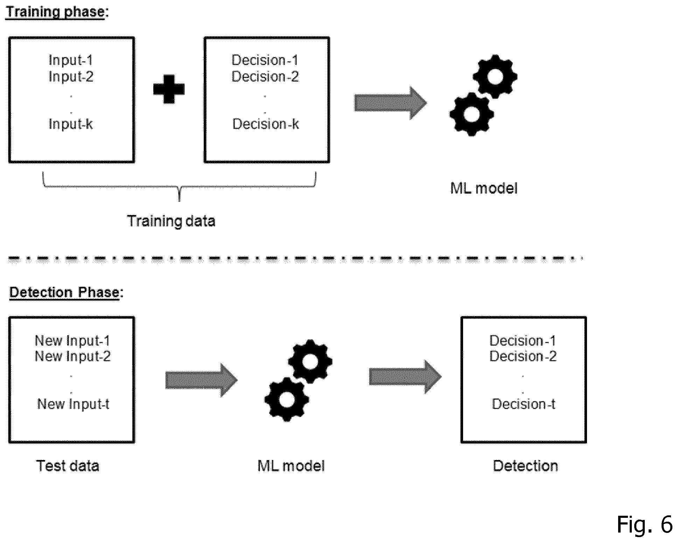

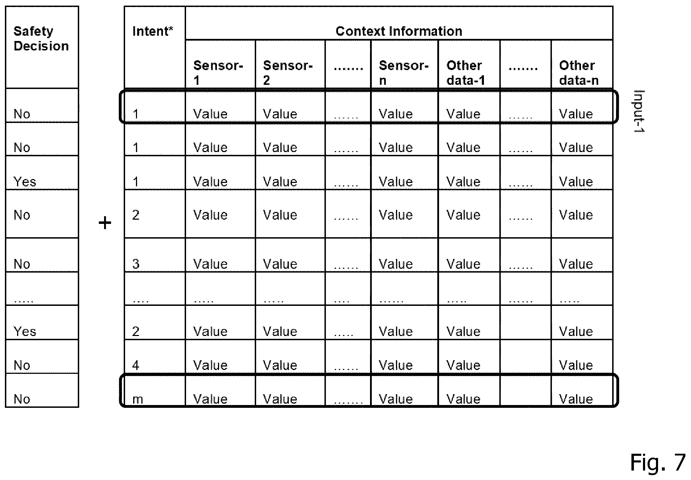

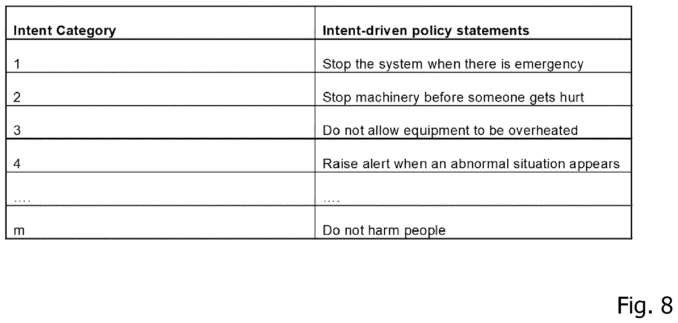

Figure 6 schematically illustrates an overview of how a machine learning model may be employed in the decision process, e.g., by the machine learning component 428. The upper portion of Figure 6 illustrates the training phase of the machine learning model and the lower portion of the figure illustrates the detection phase (or "inference phase") in which the trained model is employed for actual inference. In the training phase, the machine learning model is trained based on training data which comprises historical combined sensor data and corresponding intent-based safety policies as input data as well as the safety decisions resulting from respective input as output data, as described above. The training data in other words represents a collection of historical data, e.g., stored in database 426, including combined measurements from multiple sensors, intent-based policies as well as the previous decisions made by the safety decision program, which is collectively used to teach the desired cause-effect relation between input and output. Figure 7 exemplarily illustrates how the training data may look like, wherein the right-hand side of the table comprises *m* inputs, each made up of context information comprising n values as well as an intent statement. In the presented example, each intent statement is represented by a numerical value, which is defined in a separate table exemplarily shown in Figure 8. The left-hand side of table of Figure 7 illustrates m corresponding safety decisions which represent the outputs corresponding to the respective inputs. Once trained, the machine learning model may be used in the detection phase for actual inference, i.e., new input data (including the combined sensor data representing the current state of the CPS as well as the at least one intent-based safety policy) may be input to the trained model in order to map it to a corresponding safety decision. It will be understood that the employment of a machine learning model - compared to rule-based systems - may particularly be beneficial in complex scenarios in which the definition of an excessive number of rules may be inexpedient and when it is difficult to cover all possible cases by rules, avoiding undefined input situations. Machine learning models may provide decisions effectively regardless of the size of input data.

In the following, an example realization of the technique presented herein, which builds upon the above-described example of doors of a car being unlocked if the car rolls over, will be described in order to better elucidate the principles laid out above. As said, to check for roll-over situations, according to the conventional technique, it was only verified whether enough pressure/weight was applied on the roof of the car via a dedicated pressure sensor. Consequently, this safety feature could easily be exploited by spoofing the sensor, namely by jumping on the roof of the car to automatically unlock the doors. According to the conventional technique, the only input to the safety program is the single-valued raw sensor measurement P_{roof}(t), which denotes the pressure sensor measurement at time t on the car roof. As decision parameter, the conventional technique only uses a preset fixed (single-valued) threshold T_{roof-pressure}. Further, as decision logic, the conventional technique uses a simple comparison operation by checking whether the pressure sensor data is above the threshold, i.e., whether P_{roof}(t) > T_{roof-pressure}.

Rather than using such simplistic approach, the technique presented herein allows making more founded and well-informed decisions using a more sophisticated approach. In the presented example, rather than using the single-valued sensor measurement P_{roof}(t) as input, combined sensor data providing richer input suitable to make a well-informed safety decision may be employed, such as the combined sensor data represented by a vector [P_{roof}(t), Pₜᵢᵣₑ(t), V_{1h-average}(t)], for example. Here, P_{roof}(t) again denotes the pressure on the car roof at time t, Pₜᵢᵣₑ(t) denotes the tire pressure at time t, and V_{1h-average}(t) denotes the average speed in the last hour. The rationale behind this combination of sensor data is that the overall combination provides a clearer indication of an accident with a rolled-over car, considering whether the car roof pressure is above a certain threshold, whether the tire pressure is below a certain threshold, and whether the recent average speed is non-zero at time t. As such, rather than using a single-valued threshold T_{roof-pressure} as decision parameter, more sophisticated intent-based policy statements, e.g., as received from the intent server, may be used as decision parameters and, on this basis, a more complex decision logic rather than the simple arithmetic operation of the conventional case may be employed (e.g., including conditional statements or loops, etc.) to obtain more meaningful decision results.

As a mere example, when a high-level intent statement is defined as "car doors ensure safety of passengers in normal situations and allow safe evacuation in emergency situations", this may be translated into intent-based safety policies as follows: SP₁="emergency situation is severe crash", SP₂="severe crashes cannot happen unless car has been moving", SP₃="severe crash with a rolled over car requires emergency evacuation". Using mathematical/logical expressions, such as expressions of second-order logic, these policies may be expressed by the following rule, for example:
SP₁: Emergency={Crash}; SP₂: ∀ Crash, V_{1h-average}(t)>0 ; SP_{3:} {Ptire(t) < Tₜᵢᵣₑ₋ₚᵣₑₛₛᵤᵣₑ Λ P_{roof}(t) >T_{roof-pressure}} => SDP(output)=Emergency

In a rule-based implementation, the safety decision program (SDP) may thus make a safety decision by evaluating the current input vector [P_{roof}(t), Pₜᵢᵣₑ(t), V_{1h-average}(t)] against the configured intent-based safety policies, i.e., {SP₁, SP₂, SP₃}. More specifically, the safety decision program may make a comparison of the vector's values at time t, i.e., [P_{roof}(t), Pₜᵢᵣₑ(t), V_{1h-average}(t)], with conditions dictated by intent-based safety policies, i.e., {SP₁, SP₂, SP₃}, and check whether this comparison results in a match with any conditions indicating an emergency situation. In the example, if P_{roof}(t) >Troof-pressure, Pₜᵢᵣₑ(t) < Tₜᵢᵣₑ₋ₚᵣₑₛₛᵤᵣₑ and V_{1h-average}(t) > 0, this may result in an emergency output produced by the SDP since the situation indicated by the current context information indicates a severe crash requiring emergency evacuation. It will be understood that the rule-based implementation is merely exemplary and that other implementations of the safety decision program may be employed, including machine learning based approaches that map the combined context information and content-based policies to corresponding indications of safety-critical states or emergencies, as described above.

Another example realization of the presented technique may be in a factory automation scenario in which robot arms are arranged along a production line in robot cells. According to the conventional technique, functional safety is typically handled in such scenarios via laser curtains that detect dangerous movements, like someone reaching into the cell where the robot operates, and the robot is emergency stopped if an intrusion into the cell is detected, e.g., to prevent harm on the intruding worker. A laser curtain (or "light curtain") is a common type of safety sensor arrangement that is composed of arrays of laser, infrared or other types of light transmitters and receivers (sensors) positioned opposite to each other. The transmitters constantly send light beams to the sensors at the opposite end and, whenever the light intensity measurement by the sensors is below a threshold, an emergency case is triggered since this measurement indicates that an object is about to enter the robot cell. The conventional technique relies only on a single sensor measurement in this regard, i.e., the light intensity value, and, therefore, this use case is - like the previous car-related use case - prone to malicious falsification with respect to the safety situation. For example, laser curtains may be affected by light interference coming from other light sources, which can be exploited by malicious parties by directing light onto the receiving sensors to manipulate the intensity measurement, potentially causing the laser curtain to falsely assume that there is no interruption if another light beam is targeted to the sensors while a worker attempts to reach into the robot cell, for example. According to the conventional technique, the only input to the safety program is thus the single-valued raw sensor measurement L_{curtain}(t) denoting the light intensity measurement at time t. As decision parameter, the conventional technique uses a preset fixed (single-value) threshold T_{light-intensity} and, as decision logic, the conventional technique again uses a simple comparison operation by checking if the light intensity is below the threshold, i.e., whether L_{curtain}(t) < T_{light-intensity}.

Rather than using such simplistic approach, the presented technique may again allow making more founded decisions using a more complex approach. In the presented example, rather than using the single-valued sensor measurement L_{curtain}(t) as input, combined sensor data providing richer input for making a well-informed safety decision may be employed, such as a vector [L_{curtain}(t), V_{robot}(t), P_{safety-mat}(t), M(t)], for example, where L_{curtain}(t) again denotes the light intensity at time t, V_{robot}(t) denotes the robot speed at time t, P_{safety-mat}(t) denotes a safety mat pressure at time t (a safety mat is a commonly used equipment for measuring pressure on the floor of entrance to a robot cell), and M(t) denotes motion detection at time T, wherein M(t) may be a Boolean value being 1 if motion is detected, and 0 otherwise. The rationale behind this combination of sensor data is that it provides a clearer indication to detect a potentially dangerous intrusion into the robot cell. For example, if an attacker maliciously interferes with a light sensor using another light source to fool the laser curtain into making the wrong decision, this would be detected based on the combined sensor data. For instance, if the measured light intensity is above the threshold (indicating no intruding object), but the safety mat pressure is above the threshold, the motion detection sensor measurements positive, and the robot speed is also above the threshold, a dangerous event may be determined.

As a mere example, a high-level intent statement may be defined as "robot cell operation continues as long as there is no dangerous situation that requires emergency action". This statement may be translated into the following intent-based safety policies: SP1="dangerous situation requires human presence and fast robot movement", SP2="dangerous situation is not possible unless a moving human is present nearby robot cell", SP3="dangerous situation requires the robot cell immediately to take emergency action", SP4="emergency action is full stop in highly dangerous situations and slowing down in potentially dangerous situations", SP5="highly dangerous situations require high certainty in Normal mode and less certainty in Crowded mode". As may be gathered from policy SP4, it may generally be possible to define multiple output options, i.e., safety actuation/operation options, wherein the policy defines which output is to be used in which situation ("full stop" in highly dangerous stations, "slowing down" in only potentially dangerous situations). Therefore, rather than merely binary actuation options, such as the ones known from conventional techniques, like either switching to fail-safe mode (emergency stop) or staying in normal mode (continue operation), the presented technique may select among multiple (non-binary) options to command safety actuators accordingly. As may further be gathered from policy SPS, it may also be possible to make different safety decisions depending on different operational modes, such as a Normal mode or a Crowded mode of the robot cell.

Using mathematical/logical expressions, such as expressions in second-order logic, the above policies may be expressed by the following rules, for example:
SP₁: ∀ Dangerous situation, P_{safety-mat}(t) > Tₚᵣₑₛₛᵤᵣₑ Λ V_{robot}(t) > T_{speed}; SP₂: ∀ Dangerous situation, M(t)=1; SP₃:{P_{safety-mat}(t) > Tₚᵣₑₛₛᵤᵣₑ Λ V_{robot}(t) > T_{speed} Λ M(t)=1} ⇒ SDP(output)=Emergency Action; SP₄:Emergency Action={Full Stop If Highly Dangerous; Else, decrease speed one level down}, SP₅:Highly Dangerous={Dangerous situation with L_{curtain}(t) < T_{light-intensity} if Normal mode or Dangerous situation if Crowded mode}

In a rule-based implementation, the safety decision program (SDP) may thus make a safety decision by evaluating the current input vector [L_{curtain}(t), V_{robot}(t), P_{safety-mat}(t), M(t)] against the configured intent-based safety policies, i.e., {SP₁, SP₂, SP₃, SP₄, SP₅}. More specifically, the safety decision program may make a comparison of the context information vector's values at time t, i.e., [L_{curtain}(t), V_{robot}(t), P_{safety-mat}(t), M(t)], with conditions dictated by the intent-based safety policies, i.e., {SP₁, SP₂, SP₃, SP₄, SP₅}, and check whether this comparison results in a match with any conditions indicating an emergency situation. In the example, if L_{curtain}(t) < T_{light-intensity} Λ P_{safety-mat}(t) > Tₚᵣₑₛₛᵤᵣₑ Λ V_{robot}(t) > T_{speed} Λ M(t)=1, this may result in an emergency action of Full Stop since the comparison of the current situation indicated by the context information with the intent-based policy statements indicate a highly dangerous situation. This emergency stop may also occur if P_{safety-mat}(t) > Tₚᵣₑₛₛᵤᵣₑ Λ V_{robot}(t) > T_{speed} Λ M(t)=1 in Crowded mode regardless of the L_{curtain}(t) value to prevent harm on human even in case of a possible falsification from a malicious interference attack. On the other hand, if L_{curtain}(t) < T_{light-intensity} Λ P_{safety-mat}(t) < Tₚᵣₑₛₛᵤᵣₑ Λ V_{robot}(t) < T_{speed} Λ M(t)=0, there may be no need for any emergency action since there is no danger due to non-presence of an human approaching the robot cell. This may prevent an attack on the availability aiming to cause the system to take an emergency action. Furthermore, robot speed can be decreased by one level if (L_{curtain}(t) < T_{light-intensity} Λ P_{safety-mat}(t) > Tₚᵣₑₛₛᵤᵣₑ) V ((L_{curtain}(t) < T_{light-intensity} Λ M(t)=1) Λ V_{robot}(t) > T_{speed}, i.e., if two sensor measurements, e.g., light curtain and safety mat, or light curtain and motion sensor, indicate a potentially dangerous situation when robot is moving, for example. Like in the previous example, it will be understood that this rule-based implementation is merely exemplary and that other implementations of the safety decision program may be employed, including machine learning based implementations.

From the above example realizations, it may be seen that the presented technique may differ from conventional techniques with respect to all four main parameters involved in the safety decision process of a functional safety system, namely (i) input, (ii) decision parameters, (iii) decision logic, and (iv) output. (i) While the input of the presented technique may be given by combined context information from several sensors, conventional techniques use single-valued sensor measurements as input only. (ii) While the decision parameters of the presented technique may be based on intent-based safety policies, which may also take into account the operation mode of the system (e.g., Normal/Crowded), conventional techniques only use single-value decision parameters, such as plain threshold values, for example. (iii) While the decision logic of the presented technique may utilize complex rule-based operations to compare the multiple input values with the intent-based policies (e.g., including conditional statements or loops, etc.) and may also utilize machine learning techniques, conventional techniques only apply simplistic arithmetic comparisons decide on whether or not a safety-critical state is present. (iv) While the output of the presented technique may contain multiple actuation options depending on the inputs and decision parameters, such as stopping, slowing down, etc., conventional techniques only support single actuation options, which are triggered when the sensor management exceeds a threshold, for example. In view of the above, it will be understood that the technique presented herein provides a powerful mechanism to make more founded decisions on the current safety state of a CPS.

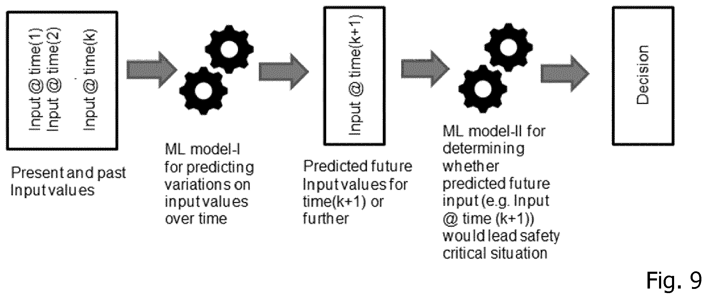

As a refinement of the technique, machine learning may also be employed for the purpose of predicting safety-critical situations in the CPS, i.e., in other words, machine learning may not only be used to detect complex safety-critical situations, but also to predict an impending safety-critical situation before it comes into existence. To this end, another machine learning model (dedicated to the prediction of future context information) which maps time series of historical combined sensor data to predicted combined sensor data may be employed. To predict a potential safety-critical situation, records of time series data containing present and past combined sensor data may be used to train a machine learning model (such as a neural network) to estimate future variations of the combined sensor data and to thereby predict variations in the combine sensor data over time. This process is schematically illustrated in Figure 9, in which the machine learning (ML) model-I predicts future combined context information (denoted "input values" in the figure), e.g., within an acceptable error-range for a certain time period in the future. These predicted combined sensor data values may then be input to the main machine learning model (denoted ML model-II in the figure, corresponding to the trained machine learning model described above) together with the at least one intent-based safety policy (i.e., in the manner described above in relation to the detection phase of Figure 6, the only difference being that, instead of the current combined sensor data, the predicted combined sensor data is used as input to the machine learning model), in order to determine whether a safety-critical state of the system will likely occur in the near future. The method may as such further comprise determining predicted combined sensor data from the plurality of sensors using a machine learning model trained to map time series of historical combined sensor data from the plurality of sensors to predicted combined sensor data from the plurality of sensors. The predicted combined sensor data may then be checked against the at least one intent-based safety policy to predict whether or not the CPS will be in a safety-critical state.

As a further refinement, the prediction of near-future values of the combined context information may also be used to detect malicious parties that attempt to modify sensor messages with the aim of altering the combined sensor data. To this end, the previous data sent by the sensors may be used to predict the next values expected to be sensed and, then, to compare the predicted values with the actual values. In case of an attacker attempting to change the physical environment to his favor (such as in the case of jumping on the car roof for unlocking the car, as described above), the values received from the sensors may change abnormally, and such change may be detected by setting a threshold (e.g., for each decision parameter) so that the threshold stands for the maximum expected change range. Therefore, in one variant, when the combined sensor data and the predicted sensor data align temporally, the method may further comprise comparing the combined sensor data with the predicted combined sensor data, and determining malicious behavior regarding the plurality of sensors when a difference between the combined sensor data and the predicted combined sensor data exceeds a threshold value. It will be understood that, instead of a threshold, another machine learning model may be used for the same anomaly detection purposes. In order to ensure that the safety function performs well even in such kinds of spoofing attempts, safety operations (which would normally be applied) may be prevented, e.g., to avoid unnecessarily stopping a machine in case of a malicious event. Causing a safety actuator of the CPS to perform a safety operation, as described above, may thus be prevented when malicious behavior regarding the plurality of sensors (attempting to create a false safety-critical situation) is determined.

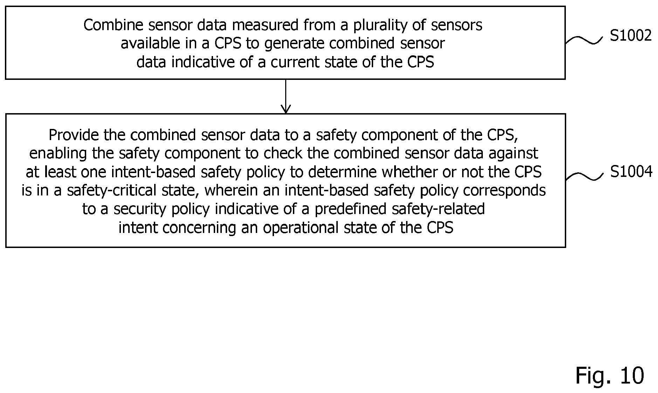

Figure 10 illustrates a method which may be performed by the context server executed on the computing unit 210 according to the present disclosure. The method is dedicated to supporting determination of a safety-critical state in a CPS. The operation of the context server may be complementary to the operation of the safety component described above and, as such, aspects described above with regard to the operation of the context server may be applicable to the operation of the context server described in the following as well. Unnecessary repetitions are thus omitted.

In step S1002, the context server may combine sensor data measured from a plurality of sensors available in the CPS to generate combined sensor data indicative of a current state of the CPS. In step S1004, the context server may provide the combined sensor data to a safety component of the CPS, enabling the safety component to check the combined sensor data against at least one intent-based safety policy to determine whether or not the CPS is in a safety-critical state, wherein an intent-based safety policy corresponds to a safety policy indicative of a predefined safety-related intent concerning an operational state of the CPS.

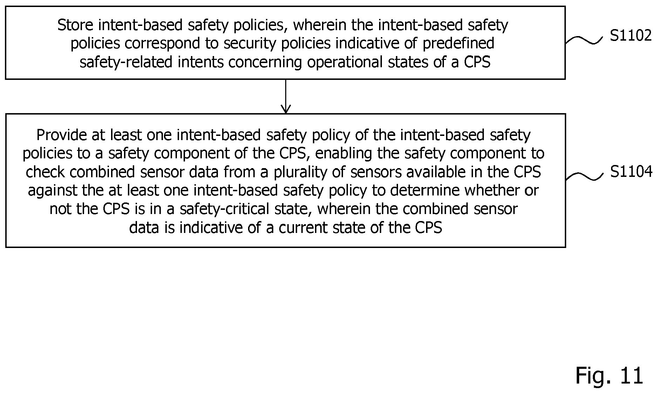

Figure 11 illustrates a method which may be performed by the intent server executed on the computing unit 220 according to the present disclosure. The method is dedicated to supporting determination of a safety-critical state in a CPS. The operation of the intent server may be complementary to the operation of the safety component described above and, as such, aspects described above with regard to the operation of the intent server may be applicable to the operation of the intent server described in the following as well. Unnecessary repetitions are thus omitted.

In step S1102, the intent server may store intent-based safety policies, wherein the intent-based safety policies correspond to security policies indicative of predefined safety-related intents concerning operational states of the CPS. In step S1104, the intent server may provide at least one intent-based safety policy of the intent-based safety policies to a safety component of the CPS, enabling the safety component to check combined sensor data from a plurality of sensors available in the CPS against the at least one intent-based safety policy to determine whether or not the CPS is in a safety-critical state, wherein the combined sensor data is indicative of a current state of the CPS.

As has become apparent from the above, the present disclosure provides a technique for determining a safety-critical state in a CPS which allows making intelligent safety decisions. The presented technique may aim to prevent running into non-safe situations without switching to fail-safe modes in true emergencies (potentially causing hazard on people, equipment and/or the environment) and to prevent unnecessarily switching to fail-safe modes causing unsecure system states (e.g., opened car doors, stopped system in normal situations, etc.). The technique may generally enable detecting and preventing attacks which do not make any modifications in the safety communication messages, i.e., attacks by which safety sensors themselves are fooled, which cannot be detected using conventional techniques even if safety protocols use embedded cryptography-based solutions.

The presented technique may thus prevent attacks fooling the safety sensors by a context-aware and intent-based approach, wherein true emergency cases may be differentiated from spoofed ones and safety may thus be guaranteed. All this may be achieved without the need to add extra crypto-based security layers, avoiding computational overhead and also preventing timeliness of the safety function from being negatively affected. Also, the technique may easily be embedded in existing functional safety protocols without major changes.

Aggregating context information from multiple sensors, including not only safety but also non-safety sensors, may enable making more intelligent decisions compared to blind decisions relying on raw single-valued safety sensor measurements as in conventional systems. Intent definitions may be used from an operational perspective, making easier the specification of the safety requirements in the context of a CPS since managers of these systems may better define high-level intents than normal actions/operations involved in physical environments.

The integration of machine learning in the decision-making process may be beneficial since, as the amount of input data (e.g., from a multitude of sensors) increases, the maintenance of manually-defined rules-based systems may become more complicated. While, for each new input, new rules may need to be added to the decision-making mechanism in a rule-based system, machine learning based decision-making may handle such undefined situations easily. Updating a machine learning based system may also be easier because the relevant "rules" may automatically be extracted from the training data by the machine learning model. Machine learning may also be beneficially employed to enable predicting safety-critical situations before they actually occur as well as to avoid unnecessarily stopping a machine in case of a malicious event, as described above.

Using the presented technique, different safety requirements may easily be implemented in different parts of a CPS and an owner of the CPS may employ different safety levels for different parts of the system, such as automation cells of a factory, by feeding the respectively necessary combined context information into the safety decision-making mechanism. For example, in high risk areas, more sensors may be used while low risk areas may employ less sensors, wherein different threshold values may be used for the different parts. Also, different sensors can be assigned different weights depending on the required security levels, as described above, affecting the outcome of the safety analysis.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method for determining a safety-critical state in a cyber-physical system, CPS, (402), the method being performed by a safety component (418) of the CPS (402) and comprising:
obtaining (S302) combined sensor data from a plurality of sensors (410, 424) available in the CPS (402), the combined sensor data being indicative of a current state of the CPS (402);
obtaining (S304) at least one intent-based safety policy, wherein an intent-based safety policy corresponds to a safety policy indicative of a predefined safety-related intent concerning an operational state of the CPS (402); and
checking (S306) the combined sensor data against the at least one intent-based safety policy to determine whether or not the CPS (402) is in a safety-critical state and **characterized in that** checking (S306) the combined sensor data against the at least one intent-based safety policy is triggered by a new sensor measurement of a sensor (410, 424) of the plurality of sensors (410, 424).

2. The method of claim 1, further comprising:
taking (S308) a safety decision based on a result of checking the combined sensor data against the at least one intent-based safety policy; and
causing (S310) a safety actuator (412) of the CPS (402) to perform a safety operation based on the safety decision.

3. The method of claim 1 or 2, wherein the combined sensor data is obtained from a context server (420) configured to combine currently measured sensor data from the plurality of sensors (410, 424) to thereby generate the combined sensor data.

4. The method of any one of claims 1 to 3, wherein, in the combined sensor data, sensor data of at least two different sensors (410, 424) of the plurality of sensors (410, 424) are weighted differently.

5. The method of any one of claims 1 to 4, wherein the at least one intent-based safety policy is obtained from an intent server (422) configured to store intent-based safety policies, wherein the intent-based safety policies correspond to safety policies indicative of predefined safety-related intents concerning operational states of the CPS (402).

6. The method of any one of claims 1 to 5, wherein each of the at least one intent-based safety policy is translated from a natural language intent statement.

7. The method of any one of claims 1 to 6, wherein each of the at least one intent-based safety policy is represented by one or more rules, in particular by one or more logical expressions, wherein checking (S306) the combined sensor data against the at least one intent-based safety policy to determine whether or not the CPS (402) is in a safety-critical state includes performing rule-based reasoning based on the one or more rules of each of the at least one intent-based safety policy.

8. The method of any one of claims 1 to 7, wherein each of the at least one intent-based safety policy defines one or more conditions to be satisfied by at least a subset of the combined sensor data, wherein checking (S306) the combined sensor data against the at least one intent-based safety policy to determine whether or not the CPS (402) is in a safety-critical state includes checking the combined sensor data against the one or more conditions of each of the at least one intent-based safety policy.

9. The method of any one of claims 1 to 8, wherein checking (S306) the combined sensor data against the at least one intent-based safety policy to determine whether or not the CPS (402) is in a safety-critical state is performed using a machine learning model trained to determine, from combined sensor data from the plurality of sensors and intent-based safety policies which correspond to security policies indicative of predefined safety-related intents concerning operational states of the CPS (402), whether or not the CPS (402) is in a safety-critical state.

10. The method of claim 9, wherein the machine learning model is trained using training data comprising historical combined sensor data measured by the plurality of sensors (410, 424) in the CPS (402) and intent-based safety policies which correspond to security policies indicative of predefined safety-related intents concerning operational states of the CPS (402) as input data, and corresponding results on whether or not the CPS (402) is in a safety-critical state as output data.

11. The method of any one of claims 1 to 10, further comprising:
determining predicted combined sensor data from the plurality of sensors (410, 424) using a machine learning model trained to map time series of historical combined sensor data from the plurality of sensors (410, 424) to predicted combined sensor data from the plurality of sensors (410, 424).

12. The method of claim 11, further comprising:
checking the predicted combined sensor data against the at least one intent-based safety policy to predict whether or not the CPS (402) will be in a safety-critical state.

13. The method of any one of claims 1 to 12, wherein the CPS (402) comprises at least one of:
an industrial Internet of Things, IoT, system,
a smart manufacturing system,
a smart grid,
a smart home, and
a connected or autonomous car.

14. A computer program product comprising program code portions for performing the method of any one of claims 1 to 13 when the computer program product is executed on one or more computing devices.

15. A computing unit (200) configured to execute a safety component (418) of a cyber-physical system, CPS, (402) for determining a safety-critical state in the CPS (402), the computing unit (200) comprising at least one processor (202) and at least one memory (204), the at least one memory (204) containing instructions executable by the at least one processor (202) such that the safety component (418) is operable to perform the method of any one of claims 1 to 13.

## Patentansprüche

1. Verfahren zum Bestimmen eines sicherheitskritischen Zustands in einem cyber-physischen System, CPS, (402), wobei das Verfahren durch eine Sicherheitskomponente (418) des CPS (402) durchgeführt wird und Folgendes umfasst:
Erlangen (S302) kombinierter Sensordaten von einer Vielzahl von Sensoren (410, 424), die in dem CPS (402) verfügbar ist, wobei die kombinierten Sensordaten auf einen aktuellen Zustand des CPS (402) hinweisen;
Erlangen (S304) mindestens einer absichtsbasierten Sicherheitsrichtlinie, wobei eine absichtsbasierte Sicherheitsrichtlinie einer Sicherheitsrichtlinie entspricht, die auf eine vordefinierte sicherheitsbezogene Absicht bezüglich eines Betriebszustands des CPS (402) hinweist; und
Prüfen (S306) der kombinierten Sensordaten hinsichtlich der mindestens einen absichtsbasierten Sicherheitsrichtlinie, um zu bestimmen, ob sich das CPS (402) in einem sicherheitskritischen Zustand befindet, und **dadurch gekennzeichnet, dass**
das Prüfen (S306) der kombinierten Sensordaten hinsichtlich der mindestens einen absichtsbasierten Sicherheitsrichtlinie durch eine neue Sensormessung eines Sensors (410, 424) der Vielzahl von Sensoren (410, 424) ausgelöst wird.

2. Verfahren nach Anspruch 1, ferner umfassend:
Treffen (S308) einer Sicherheitsentscheidung basierend auf einem Ergebnis des Prüfens der kombinierten Sensordaten hinsichtlich der mindestens einen absichtsbasierten Sicherheitsrichtlinie; und
Veranlassen (S310) eines Sicherheitsaktors (412) des CPS (402), einen Sicherheitsvorgang basierend auf der Sicherheitsentscheidung durchzuführen.

3. Verfahren nach Anspruch 1 oder 2, wobei die kombinierten Sensordaten von einem Contextserver (420) erlangt werden, der dazu konfiguriert ist, aktuell gemessene Sensordaten von der Vielzahl von Sensoren (410, 424) zu kombinieren, um dadurch die kombinierten Sensordaten zu erzeugen.

4. Verfahren nach einem der Ansprüche 1 bis 3, wobei in den kombinierten Sensordaten Sensordaten von mindestens zwei unterschiedlichen Sensoren (410, 424) der Vielzahl von Sensoren (410, 424) unterschiedlich gewichtet werden.

5. Verfahren nach einem der Ansprüche 1 bis 4, wobei die mindestens eine absichtsbasierte Sicherheitsrichtlinie von einem Absichtsserver (422) erlangt wird, der dazu konfiguriert ist, absichtsbasierte Sicherheitsrichtlinien zu speichern, wobei die absichtsbasierten Sicherheitsrichtlinien Sicherheitsrichtlinien entsprechen, die auf vordefinierte sicherheitsbezogene Absichten bezüglich Betriebszuständen des CPS (402) hinweisen.

6. Verfahren nach einem der Ansprüche 1 bis 5, wobei jede der mindestens einen absichtsbasierten Sicherheitsrichtlinie aus einer Absichtserklärung in natürlicher Sprache übersetzt wird.

7. Verfahren nach einem der Ansprüche 1 bis 6, wobei jede der mindestens einen absichtsbasierten Sicherheitsrichtlinie durch eine oder mehrere Regeln, insbesondere durch einen oder mehrere logische Ausdrücke, dargestellt wird, wobei das Prüfen (S306) der kombinierten Sensordaten hinsichtlich der mindestens einen absichtsbasierten Sicherheitsrichtlinie, um zu bestimmen, ob sich das CPS (402) in einem sicherheitskritischen Zustand befindet, Durchführen eines regelbasierten Schlussfolgerns basierend auf der einen oder den mehreren Regeln jeder der mindestens einen absichtsbasierten Sicherheitsrichtlinie beinhaltet.

8. Verfahren nach einem der Ansprüche 1 bis 7, wobei jede der mindestens einen absichtsbasierten Sicherheitsrichtlinie eine oder mehrere Bedingungen definiert, die durch mindestens einen Teilsatz der kombinierten Sensordaten zu erfüllen sind, wobei das Prüfen (S306) der kombinierten Sensordaten hinsichtlich der mindestens einen absichtsbasierten Sicherheitsrichtlinie, um zu bestimmen, ob sich das CPS (402) in einem sicherheitskritischen Zustand befindet, Prüfen der kombinierten Sensordaten hinsichtlich der einen oder der mehreren Bedingungen jeder der mindestens einen absichtsbasierten Sicherheitsrichtlinie beinhaltet.

9. Verfahren nach einem der Ansprüche 1 bis 8, wobei das Prüfen (S306) der kombinierten Sensordaten hinsichtlich der mindestens einen absichtsbasierten Sicherheitsrichtlinie, um zu bestimmen, ob sich das CPS (402) in einem sicherheitskritischen Zustand befindet, unter Verwendung eines Modells für maschinelles Lernen durchgeführt wird, das dazu trainiert ist, aus kombinierten Sensordaten von der Vielzahl von Sensoren und absichtsbasierten Sicherheitsrichtlinien, die Sicherheitsrichtlinien entsprechen, die auf vordefinierte sicherheitsbezogene Absichten bezüglich Betriebszuständen des CPS (402) hinweisen, zu bestimmen, ob sich das CPS (402) in einem sicherheitskritischen Zustand befindet.

10. Verfahren nach Anspruch 9, wobei das Modell für maschinelles Lernen unter Verwendung von Trainingsdaten, umfassend historische kombinierte Sensordaten, die durch die Vielzahl von Sensoren (410, 424) in dem CPS (402) gemessen wurden, und absichtsbasierte Sicherheitsrichtlinien, die Sicherheitsrichtlinien entsprechen, die auf vordefinierte sicherheitsbezogene Absichten bezüglich Betriebszuständen des CPS (402) hinweisen, als Eingabedaten und entsprechende Ergebnisse, ob sich das CPS (402) in einem sicherheitskritischen Zustand befindet, als Ausgabedaten trainiert wird.

11. Verfahren nach einem der Ansprüche 1 bis 10, ferner umfassend:
Bestimmen vorhergesagter kombinierter Sensordaten von der Vielzahl von Sensoren (410, 424) unter Verwendung eines Modells für maschinelles Lernen, das dazu trainiert ist, Zeitreihen historischer kombinierter Sensordaten von der Vielzahl von Sensoren (410, 424) vorhergesagten kombinierten Sensordaten von der Vielzahl von Sensoren (410, 424) zuzuordnen.

12. Verfahren nach Anspruch 11, ferner umfassend:
Prüfen der vorhergesagten kombinierten Sensordaten hinsichtlich der mindestens einen absichtsbasierten Sicherheitsrichtlinie, um vorherzusagen, ob sich das CPS (402) in einem sicherheitskritischen Zustand befinden wird.

13. Verfahren nach einem der Ansprüche 1 bis 12, wobei das CPS (402) mindestens eines von Folgendem umfasst:
einem industriellen Internet-der-Dinge-System, IdD-System,
einem intelligenten Produktionssystem,
einem intelligenten Netz,
einem Smart Home und
einem verbundenen oder autonomen Wagen.

14. Computerprogrammprodukt, umfassend Programmcodeabschnitte zum Durchführen des Verfahrens nach einem der Ansprüche 1 bis 13, wenn das Computerprogrammprodukt auf einer oder mehreren Rechenvorrichtungen ausgeführt wird.

15. Recheneinheit (200), die dazu konfiguriert ist, eine Sicherheitskomponente (418) eines cyber-physischen Systems, CPS, (402) zum Bestimmen eines sicherheitskritischen Zustands in dem CPS (402) auszuführen, wobei die Recheneinheit (200) mindestens einen Prozessor (202) und mindestens einen Speicher (204) umfasst, wobei der mindestens eine Speicher (204) Anweisungen enthält, die durch den mindestens einen Prozessor (202) derart ausführbar sind, dass die Sicherheitskomponente (418) dazu betreibbar ist, das Verfahren nach einem der Ansprüche 1 bis 13 durchzuführen.

## Revendications

1. Procédé de détermination d'un état critique de sécurité dans un système cyber-physique, CPS, (402), le procédé étant exécuté par un composant de sécurité (418) du CPS (402) et comprenant :
l'obtention (S302) des données de capteur combinées à partir d'une pluralité de capteurs (410, 424) disponibles dans le CPS (402), les données de capteur combinées étant indicatives d'un état actuel du CPS (402) ;
l'obtention (S304) d'au moins une politique de sécurité basée sur l'intention, dans lequel une politique de sécurité basée sur l'intention correspond à une politique de sécurité indicative d'une intention prédéfinie liée à la sécurité concernant un état opérationnel du CPS (402) ; et
la vérification (S306) des données de capteur combinées par rapport à l'au moins une politique de sécurité basée sur l'intention pour déterminer si le CPS (402) est ou non dans un état critique pour la sécurité et **caractérisé en ce que**
la vérification (S306) des données de capteur combinées par rapport à l'au moins une politique de sécurité basée sur l'intention est déclenchée par une nouvelle mesure de capteur d'un capteur (410, 424) de la pluralité de capteurs (410, 424).

2. Procédé selon la revendication 1, comprenant en outre :
la prise (S308) d'une décision de sécurité sur la base d'un résultat de la vérification des données de capteur combinées par rapport à l'au moins une politique de sécurité basée sur l'intention ; et
le fait d'amener (S310) un actionneur de sécurité (412) du CPS (402) à exécuter une opération de sécurité sur la base de la décision de sécurité.

3. Procédé selon la revendication 1 ou 2, dans lequel les données de capteur combinées sont obtenues à partir d'un serveur de contexte (420) configuré pour combiner les données de capteur actuellement mesurées provenant de la pluralité de capteurs (410, 424) pour ainsi générer les données de capteur combinées.

4. Procédé selon l'une quelconque des revendications 1 à 3, dans lequel, dans les données de capteur combinées, les données de capteur d'au moins deux capteurs différents (410, 424) de la pluralité de capteurs (410, 424) sont pondérées différemment.

5. Procédé selon l'une quelconque des revendications 1 à 4, dans lequel l'au moins une politique de sécurité basée sur l'intention est obtenue à partir d'un serveur d'intention (422) configuré pour stocker des politiques de sécurité basées sur l'intention, dans lequel les politiques de sécurité basées sur l'intention correspondent aux politiques de sécurité. indicatives d'intentions prédéfinies liées à la sécurité concernant les états opérationnels du CPS (402).

6. Procédé selon l'une quelconque des revendications 1 à 5, dans lequel chacune de l'au moins une politique de sécurité basée sur l'intention est traduite à partir d'une déclaration d'intention en langage naturel.

7. Procédé selon l'une quelconque des revendications 1 à 6, dans lequel chacune de l'au moins une politique de sécurité basée sur l'intention est représentée par une ou plusieurs règles, en particulier par une ou plusieurs expressions logiques, dans lequel la vérification (S306) des données de capteur combinées par rapport à l'au moins une politique de sécurité basée sur l'intention pour déterminer si le CPS (402) est ou non dans un état critique pour la sécurité comporte l'exécution d'un raisonnement basé sur des règles sur la base de la ou des règles de chacune des au moins une politique de sécurité basée sur l'intention.

8. Procédé selon l'une quelconque des revendications 1 à 7, dans lequel chacune de l'au moins une politique de sécurité basée sur l'intention définit une ou plusieurs conditions devant être satisfaites par au moins un sous-ensemble des données de capteur combinées, dans lequel la vérification (S306) des données de capteur combinées par rapport à l'au moins une politique de sécurité basée sur l'intention pour déterminer si le CPS (402) est ou non dans un état critique pour la sécurité comporte la vérification des données de capteur combinées par rapport à une ou plusieurs conditions de chacune des au moins une politique de sécurité basée sur l'intention.

9. Procédé selon l'une quelconque des revendications 1 à 8, dans lequel la vérification (S306) des données de capteur combinées par rapport à l'au moins une politique de sécurité basée sur l'intention pour déterminer si le CPS (402) est ou non dans un état critique pour la sécurité est effectuée en utilisant un modèle d'apprentissage automatique entraîné pour déterminer, à partir de données de capteur combinées provenant de la pluralité de capteurs et de politiques de sécurité basées sur l'intention qui correspondent à des politiques de sécurité indicatives d'intentions prédéfinies liées à la sécurité concernant les états opérationnels du CPS (402), si le CPS (402) est ou non dans un état critique pour la sécurité.

10. Procédé selon la revendication 9, dans lequel le modèle d'apprentissage automatique est entraîné à l'aide de données d'entraînement comprenant des données de capteur combinées historiques mesurées par la pluralité de capteurs (410, 424) dans le CPS (402) et des politiques de sécurité basées sur l'intention qui correspondent à des politiques de sécurité indicatives d'intentions prédéfinies liées à la sécurité concernant les états opérationnels du CPS (402) en tant que données d'entrée, et des résultats correspondants indiquant si le CPS (402) est ou non dans un état critique pour la sécurité en tant que données de sortie.

11. Procédé selon l'une quelconque des revendications 1 à 10, comprenant en outre :
la détermination des données de capteur combinées prédites provenant de la pluralité de capteurs (410, 424) à l'aide d'un modèle d'apprentissage automatique entraîné pour cartographier des séries temporelles de données de capteur combinées historiques provenant de la pluralité de capteurs (410, 424) avec des données de capteur combinées prédites provenant de la pluralité de capteurs (410, 424).

12. Procédé selon la revendication 11, comprenant en outre :
la vérification des données de capteur combinées prédites par rapport à l'au moins une politique de sécurité basée sur l'intention pour prédire si le CPS (402) sera ou non dans un état critique pour la sécurité.

13. Procédé selon l'une quelconque des revendication 1 à 12, dans lequel le CPS (402) comprend l'un parmi :
un système Internet des objets, IoT, industriel,
un système de fabrication intelligent,
un réseau intelligent,
une maison intelligente, et
une voiture connectée ou autonome.

14. Produit programme informatique comprenant des parties de code de programme pour exécuter le procédé selon l'une quelconque des revendications 1 à 13 lorsque le produit programme informatique est exécuté sur un ou plusieurs dispositifs informatiques.

15. Unité informatique (200) configurée pour exécuter un composant de sécurité (418) d'un système cyber-physique, CPS, (402) pour déterminer un état critique pour la sécurité dans le CPS (402), l'unité informatique (200) comprenant au moins un processeur (202) et au moins une mémoire (204), l'au moins une mémoire (204) contenant des instructions exécutables par l'au moins un processeur (202) de sorte que le composant de sécurité (418) peut fonctionner pour exécuter le procédé selon l'une quelconque des revendications 1 à 13.
